# FASCICULE DE BREVET EUROPEEN

(11) **EP 2 861 471 B1**
(45) Date de publication et mention de la délivrance du brevet: **03.07.2019**
(21) Numéro de dépôt: 13733403.3
(22) Date de dépôt: 13.06.2013
(51) Int. Cl.: B60S 1/52

(54) **BALAI D'ESSUYAGE COMPRENANT UN DISPOSITIF ET UN MOYEN DE PROJECTION DE LIQUIDE DE LAVAGE**
WISCHBLATT MIT EINER VORRICHTUNG UND EINEM MITTEL ZUM SPRÜHEN EINER WASCHFLÜSSIGKEIT
WIPER BLADE INCLUDING A DEVICE AND A MEANS FOR SPRAYING A WASHING LIQUID

(30) Priorité: 13.06.2012 FR 1255521
(43) Date de publication de la demande: 22.04.2015
(73) Titulaire: Valeo Systèmes d'Essuyage, 78322 Le Mesnil Saint Denis (FR)
(72) Inventeur: CAILLOT, Gérald, 78720 Cernay La Ville (FR)
(74) Mandataire: Callu-Danseux, Violaine
(86) Numéro de dépôt international: PCT/FR2013/051388
(87) Numéro de publication internationale: WO 2013/186498

(56) Documents cités:
- EP-A1- 0 860 336
- WO-A1-2012/144547
- DE-A1- 1 755 762
- DE-A1- 1 912 037
- DE-A1- 2 039 672
- DE-A1- 4 116 720

## Description

Le secteur technique de la présente invention est celui des balais d'essuyage utilisés pour évacuer de l'eau présente sur une vitre d'un véhicule, notamment automobile. Un tel balai d'essuyage est plus particulièrement destiné à être installé sur un pare-brise de ce véhicule.

Les automobiles sont couramment équipées d'installation d'essuyage et de système de lavage pour assurer un essuyage du pare-brise et éviter que la vision qu'a le conducteur de son environnement soit perturbée par la pluie ou par des projections de salissure. Une telle installation d'essuyage comprend deux balais d'essuyage qui raclent la surface extérieure du pare-brise de manière à évacuer l'eau présente sur cette surface.

Il est également connu d'équiper ce véhicule d'une installation de lavage agencée pour projeter le liquide de lavage sur le pare-brise, de manière à faciliter la dissolution de ces salissures, et ainsi augmenter la qualité du nettoyage de ce pare-brise. Cette installation de lavage comprend alors au moins deux gicleurs distincts installés sur un capot du véhicule, l'un de ces gicleurs étant dédié à l'arrosage d'une zone du pare-brise située en face du conducteur du véhicule, alors que l'autre gicleur est affecté à l'arrosage d'une zone du pare-brise située en face du passager avant de véhicule.

L'inconvénient d'une telle solution réside dans le fait qu'il est nécessaire de doubler plusieurs composants, et d'assurer leurs approvisionnements par un réseau de tubes de transport du liquide de lavage. On comprend ainsi qu'une telle solution technique mérite d'être rationalisée, de manière notamment à réduire le coût de la fonction de lavage. DE-A-1912037 montre le préambule de la revendication 1.

Il est également connu de piloter automatiquement le mouvement de ces balais d'essuyage au moyen d'un détecteur de pluie installé sur le pare-brise du véhicule. Quand ce dernier détecte la présence de gouttes sur le pare-brise, il délivre une information permettant de mettre en fonctionnement de manière automatique l'installation d'essuyage.

Un tel détecteur de pluie est en général installé au niveau d'une partie supérieure du pare-brise. Par ailleurs, le bon fonctionnement de ce détecteur est conditionné par l'état de propreté de cette partie du pare-brise au droit de laquelle le détecteur de pluie est installé. Il peut donc être nécessaire de procéder à un nettoyage de cette partie.

Un inconvénient de cette situation réside dans le fait que les systèmes de lavage connus à ce jour ne projettent pas une quantité de liquide de lavage suffisamment importante sur la partie du pare-brise où est installé le détecteur de pluie.

Un autre inconvénient de cette situation réside dans le fait que les systèmes de lavage doivent en priorité projeter le liquide de lavage sur une large portion du pare-brise de manière à nettoyer le champ de vision du conducteur ou du passager. Une telle priorité de projection se fait néanmoins au détriment de la partie supérieure du pare-brise où est installé le détecteur de pluie, celle-ci ne recevant que peu de liquide de lavage.

En tout état de cause et lorsque le liquide de lavage réussit à atteindre la partie supérieure du pare-brise, il se trouve évacuer par l'installation d'essuyage immédiatement après son contact sur la face du pare-brise au droit de laquelle le détecteur est installé. Le liquide de lavage ne dispose donc pas du temps nécessaire pour dissoudre les particules sur la partie supérieure du pare-brise.

On comprend donc que le lavage de la partie du pare-brise où est placé le détecteur de pluie n'est pas assurée de manière efficace, ce qui peut conduire à des erreurs de détection de ce détecteur de pluie qui, corrélativement, provoquent une mise en fonctionnement erronée de l'installation d'essuyage.

L'invention a donc pour objet de résoudre les inconvénients décrits ci-dessus en proposant un balai d'essuyage d'une vitre d'un véhicule, comprenant au moins un dispositif de projection d'un liquide de lavage agencé pour projeter ledit liquide de lavage sur une première zone de la vitre essuyée par le balai d'essuyage, innovant en ce qu'il comprend un moyen de projection du liquide de lavage agencé pour projeter le liquide de lavage exclusivement sur une zone de la vitre différente de la première zone, appelée deuxième zone.

Le dispositif de projection est ainsi agencé pour projeter le liquide de lavage en amont ou en aval du balai d'essuyage, alors que le moyen de projection est configuré pour projeter le liquide de lavage sensiblement selon un axe longitudinal le long duquel s'étend le balai d'essuyage selon l'invention. En d'autres termes, le dispositif de lavage arrose une zone située perpendiculairement à l'axe longitudinal et contenu entre deux extrémités longitudinales du balai d'essuyage, alors que le moyen de projection envoie le liquide de lavage hors de cette zone.

Grace à un seul balai d'essuyage équipé de cet ensemble de projection, on assure d'une part le nettoyage de la zone du pare-brise située en face du conducteur, et d'autre part le nettoyage de la zone du pare-brise située en face du passager avant du véhicule. Au surplus, une telle solution technique garantit un bon nettoyage de la zone de positionnement du détecteur de pluie, notamment.

Selon un exemple de réalisation, le balai d'essuyage peut comprendre au moins un premier conduit apte à canaliser le liquide de lavage et en communication avec le moyen de projection. Selon une variante, le premier conduit canalise le liquide de lavage uniquement vers le moyen de projection. Selon une variante complémentaire, le premier conduit canalise le liquide de lavage également vers le dispositif de projection.

Le balai d'essuyage s'étend selon un axe longitudinal et comprend une première extrémité et une deuxième extrémité selon l'axe longitudinal, le moyen de projection étant installé au niveau d'une des extrémités du balai d'essuyage. L'une des extrémités, appelée deuxième extrémité, est apte à être disposée au voisinage d'un point de rotation du balai d'essuyage, cette deuxième extrémité recevant le dispositif de projection. L'autre extrémité, appelée première extrémité, est opposée à la deuxième extrémité par rapport au balai d'essuyage et reçoit notamment le moyen de projection.

Selon un exemple de réalisation, le moyen de projection peut être un premier embout comprenant un canal de circulation du liquide de lavage et au moins un moyen de diffusion du liquide de lavage en communication avec le canal de circulation et agencé pour projeter le liquide de lavage sur la deuxième zone de la vitre.

Dans un tel cas, le moyen de diffusion peut être un trou débouchant au niveau d'une paroi du premier embout. Ce trou peut déboucher au niveau d'une face du premier embout opposée à une portion du premier embout par laquelle l'extrémité du balai d'essuyage est insérée.

Selon une alternative, le moyen de diffusion peut être une bille percée et logée dans une paroi du premier embout. La bille percée est ainsi installée à une extrémité du canal de circulation ménagé dans le premier embout.

Selon un exemple de l'invention, le balai d'essuyage peut comprendre un deuxième conduit apte à canaliser le liquide de lavage et en communication avec le dispositif de projection. Le balai d'essuyage comporte alors le premier conduit, par exemple affecté au moyen de projection, et le deuxième conduit affecté au dispositif de projection.

Selon un mode de réalisation, le dispositif de projection peut comprendre au moins une multiplicité de trous ménagée dans le deuxième conduit et le long de celui-ci. La combinaison de cette multiplicité de trous avec le deuxième conduit forme une rampe de projection du liquide de lavage.

Selon un autre mode de réalisation alternatif ou complémentaire, le dispositif de projection peut comprendre au moins un deuxième embout installé à une extrémité du balai d'essuyage, ledit deuxième embout comprenant au moins un orifice de pulvérisation agencé pour projeter le liquide de lavage sur la première zone de la vitre.

L'invention vise également un système d'essuyage d'une vitre d'un véhicule comprenant un premier balai d'essuyage incorporant l'une quelconque des caractéristiques présentées ci-dessus et apte à essuyer la première zone de la vitre, et un deuxième balai d'essuyage apte à essuyer la deuxième zone de la vitre.

Un tout premier avantage selon l'invention réside dans le fait qu'il est possible de simplifier l'installation d'arrosage en supprimant tous moyens d'arrosage habituellement affectés à la zone du pare-brise située en face du passager. A titre d'exemple, il est possible de supprimer le gicleur positionné sur le capot en face de zone. Il est également possible de supprimer le réseau de tube d'alimentation de ce gicleur. La solution technique apportée par l'invention permet encore d'employer un balai d'essuyage de conception simple, ce qui permet de réduire le coût de la fonction essuyage.

Un autre avantage réside dans le fait que le moyen de projection de liquide de lavage est spécialement dédié à l'arrosage de la partie du pare-brise au droit de laquelle un élément, par exemple un détecteur de pluie, peut être installé. La fonction de ce moyen de projection peut ainsi prioritairement être affectée au nettoyage de la partie concernée du pare-brise.

L'invention permet également de projeter une quantité importante de liquide de lavage sur cette partie supérieure du pare-brise, favorisant ainsi le bon nettoyage de celle-ci.

Enfin, le décalage de mouvement entre les deux balais d'essuyage permet de garantir un temps de dépôt minimum du liquide de lavage sur la partie du pare-brise au droit de laquelle le détecteur de pluie peut être installé, avant le passage du balai affecté au balayage de cette partie du pare-brise.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un balai d'essuyage selon l'invention,
- la figure 2 est une vue en coupe du balai d'essuyage illustré à la figure 1,
- la figure 3 est une vue du moyen de projection installé sur le balai d'essuyage selon l'invention, en perspective d'un premier côté,
- la figure 4 est une vue du moyen de projection installé sur le balai d'essuyage selon l'invention, en perspective d'un deuxième côté,
- la figure 5 est une vue en perspective tronquée du moyen de projection enfilé sur le balai d'essuyage,
- la figure 6 est une vue en perspective d'une extrémité longitudinale du balai d'essuyage selon l'invention, illustrant la présence d'un dispositif de projection,
- la figure 7 est une vue en perspective du dispositif de projection de la figure 6,
- la figure 8 est une vue en perspective d'une variante de réalisation du balai d'essuyage selon l'invention,
- la figure 9 est une vue en coupe du balai d'essuyage selon la variante de réalisation,
- la figure 10 est une vue de face d'un pare-brise équipé d'un système d'essuyage comprenant au moins un balai d'essuyage selon l'un quelconque des modes de réalisation.

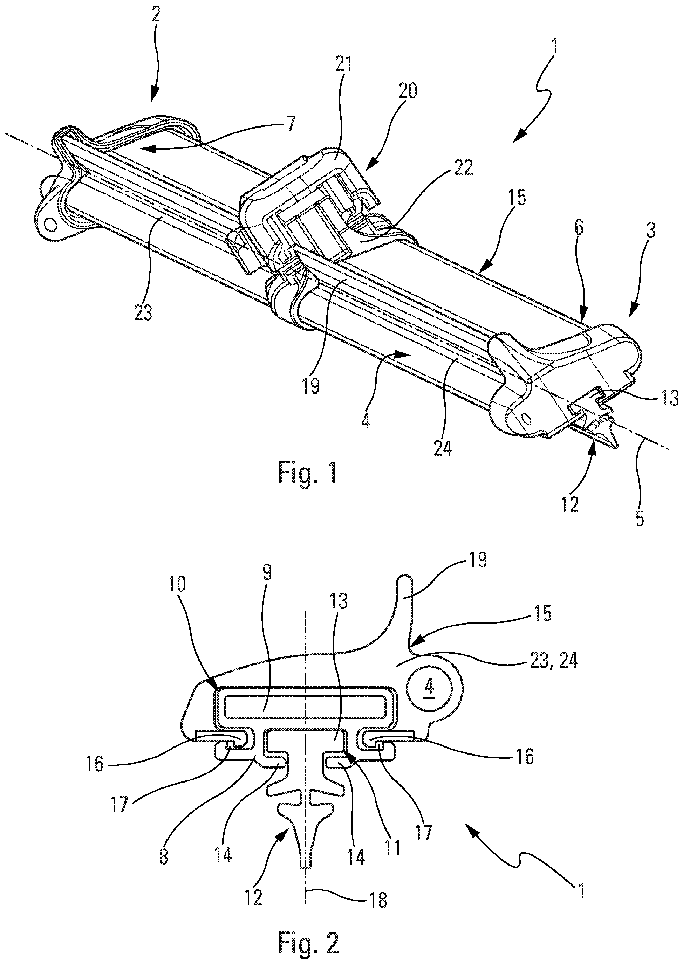

La figure 1 illustre un exemple de réalisation d'un balai d'essuyage 1 selon l'invention. Un tel balai d'essuyage 1 est destiné à être posé en appui sur une face extérieure d'une vitre d'un véhicule, cette vitre pouvant être un pare-brise avant ou une lunette arrière dudit véhicule. Dans la description qui suit, le terme pare-brise sera utilisé à titre d'exemple d'application de la vitre.

Ce balai d'essuyage effectue un mouvement sur la face extérieure de ce pare-brise, de manière à évacuer l'eau présente sur cette dernière. Ce mouvement peut, par exemple, être une rotation autour d'un point de rotation, ce dernier étant relié au balai d'essuyage 1 par l'intermédiaire d'un bras. Le balai d'essuyage 1 décrit ainsi une course sur la face extérieure du pare-brise entre une position de repos où le balai est installé en pied de pare-brise et une position extrême, où le balai d'essuyage 1 est au moins parallèle à un montant du véhicule bordant le pare-brise.

On considère ainsi que le balai d'essuyage 1 selon l'invention essuie une première zone du pare-brise, cette première zone correspondant à la course dudit balai sur la face extérieure du pare-brise.

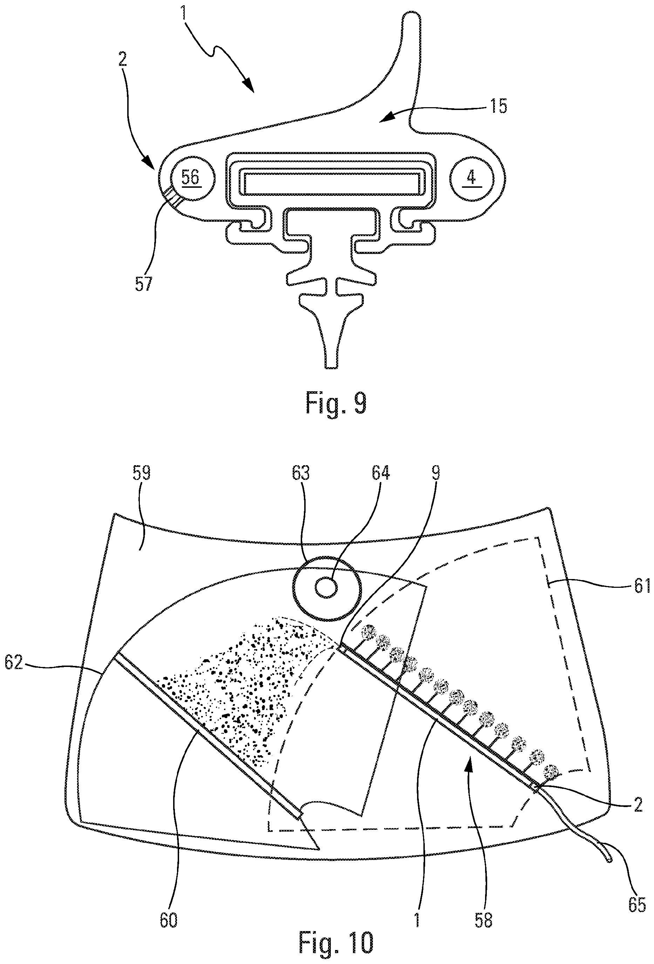

Ce pare-brise comprend également au moins une zone qui n'est pas balayée par le balai d'essuyage 1 selon l'invention. Cette zone différente de la première zone est appelée ci-après « deuxième zone » du pare-brise. Ces zones seront identifiées en référence à la figure 10.

Le balai d'essuyage 1 comprend un dispositif de projection 2 d'un liquide de lavage. Ce dernier est contenu dans un réservoir installé sur le véhicule, et mis en circulation vers le balai d'essuyage 1 par une pompe et/ou un module de gestion de la circulation de ce liquide de lavage.

La fonction du dispositif de projection 2 est projeter du liquide de lavage sur la zone du pare-brise balayée par le balai d'essuyage 1 porteur de ce dispositif de projection, cette zone étant ici la première zone.

Selon l'invention, le balai d'essuyage 1 comprend un moyen de projection 3 du liquide de lavage dont la structure est configurée pour projeter le liquide de lavage sur la deuxième zone du pare-brise, c'est-à-dire la zone qui n'est pas balayée par le balai d'essuyage 1 porteur d'un tel moyen de projection 3.

Pour alimenter ce moyen de projection 3 en liquide de lavage, le balai d'essuyage 1 est pourvu d'au moins un conduit de transport de liquide de lavage, ci-après appelé premier conduit 4. Selon un exemple de réalisation, un tel conduit peut être formé par un tube rapporté et solidarisé sur le balai d'essuyage, de manière à fournir le liquide de lavage au moyen de projection 3. Selon un autre exemple de réalisation, le premier conduit 4 peut être formé par un tube ménagé au coeur d'une des pièces constitutives du balai d'essuyage 1, comme cela sera détaillé plus bas. Dans l'une ou l'autre des alternatives évoquées ci-dessus, le premier conduit 4 est en communication avec le moyen de projection 3. Dans l'intégralité de la description et quel que soit les éléments en communication, une telle expression signifie d'une manière générale que le premier conduit 4 est raccordé directement ou indirectement au moyen de projection 3, de sorte que le liquide de lavage qui transite dans le premier conduit 4 puisse rejoindre le moyen de projection 3, avant d'être projeté sur la deuxième zone de pare-brise.

Le premier conduit 4 peut être affecté à la fourniture de liquide de lavage uniquement au moyen de projection 3. Alternativement, le premier conduit 4 peut également être en communication avec le dispositif de projection 2. On comprend ici qu'un unique premier conduit 4 peut canaliser le liquide de lavage à la fois vers le dispositif de projection 2 et vers le moyen de projection 3.

Le balai d'essuyage 1 s'étend selon un axe longitudinal, référencé 5 sur la figure 1. Ce balai d'essuyage 1 est ainsi terminé par deux extrémités longitudinales, appelées première extrémité 6 et deuxième extrémité 7. La deuxième extrémité 7 du balai d'essuyage 1 est celle qui est au voisinage du point de rotation du bras entrainant le balai d'essuyage 1, alors que la première extrémité 6 est celle qui est à l'opposé de la deuxième extrémité 7 par rapport au corps du balai d'essuyage 1.

Selon un aspect de l'invention, le moyen de projection 3 est installé sur la première extrémité 6 du balai d'essuyage 1. Le dispositif de projection 2 peut quant à lui être installé sur la deuxième extrémité 7, comme cela est représenté à titre illustratif sur la figure 1.

Selon l'exemple de réalisation, le balai d'essuyage 1 peut être de type à raclette et palonniers. Il peut également s'agir d'un balai plat, appelé « flat blade », comme cela est représenté aux figures 1, 2, 8 et 9.

Dans cette seconde alternative, le balai d'essuyage 1 comprend un support 8 à l'intérieur duquel est logée au moins une vertèbre de rigidification 9. Le support 8 est une pièce en plastique dans laquelle est ménagée une cavité centrale 10 fermée le long du balai d'essuyage 1, et ouverte au niveau des première et deuxième extrémités 6 et 7 de ce balai d'essuyage 1. Cette cavité centrale 10 est par ailleurs fermée à chaque extrémité longitudinale du balai d'essuyage par le moyen de projection 3 et par le dispositif de projection 2.

A l'intérieur de cette cavité centrale 10 s'étend la vertèbre de rigidification 9 formée, notamment, par une lame métallique qui contraint le balai d'essuyage 1 à suivre un profil concave quand il n'est pas appliqué contre le pare-brise.

Alternativement, le balai d'essuyage 1 peut comprendre deux vertèbres de rigidification. Dans ce cas, les deux vertèbres sont rendues solidaires d'une lame de balayage 12 constitutive du balai d'essuyage 1 et ce dernier est dépourvu de support 8. La lame de balayage 12 peut être pourvu de deux fentes ouvertes le long du balai d'essuyage 1 et disposées latéralement sur celle-ci, ces deux fentes recevant chacune une vertèbre de rigidification.

Le support 8 comprend encore un logement longitudinal 11 dans lequel est enfilée la raclette, autrement appelée lame de balayage 12. Cette dernière est un composant souple du balai d'essuyage en appui contre la face extérieure du pare-brise. La lame de balayage 12 comprend un talon 13 qui s'étend dans le logement longitudinal 11, ce talon 13 étant maintenu entre deux flancs 14 constitutifs du support 8 et qui entourent le talon 13.

Sur sa partie supérieure, le support 8 est recouvert par un déflecteur d'air 15 agencé pour utiliser l'effet dynamique du déplacement du véhicule pour augmenter la force d'appui du balai d'essuyage 1 sur le pare-brise. Ce déflecteur d'air 15 est rendu solidaire du support 8 au moyen de deux griffes 16 qui s'accrochent chacune dans une gorge 17 ménagée dans le support 8 et disposée de part et d'autre d'un plan de symétrie 18 passant par la lame d'essuyage 12 et le support 8. On comprend ainsi que le déflecteur d'air 15 entoure la partie supérieure du support 8.

Ce déflecteur d'air 15 comprend encore une aube 19 qui s'étend le long du balai d'essuyage 1 dans un plan sensiblement parallèle au plan de symétrie 18.

Selon un exemple de réalisation, le déflecteur d'air 15 est la pièce constitutive du balai d'essuyage 1 dans laquelle est ménagé le premier conduit 4 apte à canaliser le liquide de lavage. C'est donc par ce biais que ce liquide peut rejoindre le moyen de projection 3, et éventuellement le dispositif de projection 2.

La ou les vertèbres de rigidification 9, la lame de balayage 12, et éventuellement le support 8, s'étendent sans interruption de la première extrémité 6 à la deuxième extrémité 7. Le déflecteur d'air 15 peut quant à lui être formé de deux portions 23 et 24 séparées et rapportées sur le support 8 du balai d'essuyage 1.

Sensiblement au centre du balai d'essuyage 1, par exemple entre les deux portions 23 et 24 constitutives du déflecteur d'air 15, on trouve un moyen de solidarisation 20 du balai d'essuyage 1 sur le bras qui génère son mouvement, notamment sa rotation.

Ce moyen de solidarisation 20 comprend au moins un adaptateur 21 relié par une liaison pivot à un connecteur 22. Ce dernier assure une prise mécanique sur la ou les vertèbres de rigidification 9, alors que l'adaptateur 21 a pour fonction d'assurer une liaison mécanique entre une extrémité distale du bras et le connecteur 22. Un tel adaptateur 21 est par conséquent une pièce dont la forme peut être modifiée en fonction de la forme de l'extrémité du bras, par exemple une extrémité rectiligne, en forme de crochet ou présentant un doigt de basculement et une ou plusieurs pattes de solidarisation.

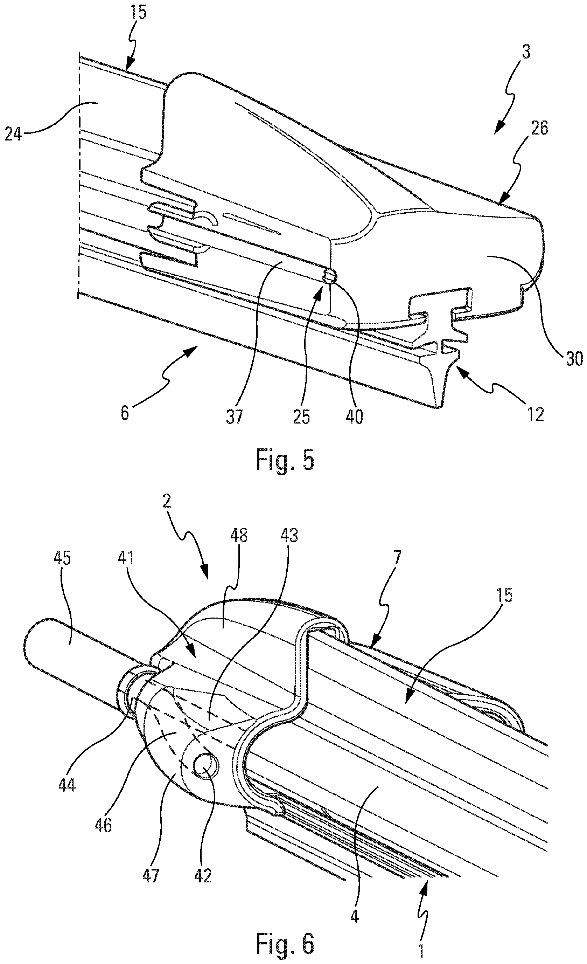

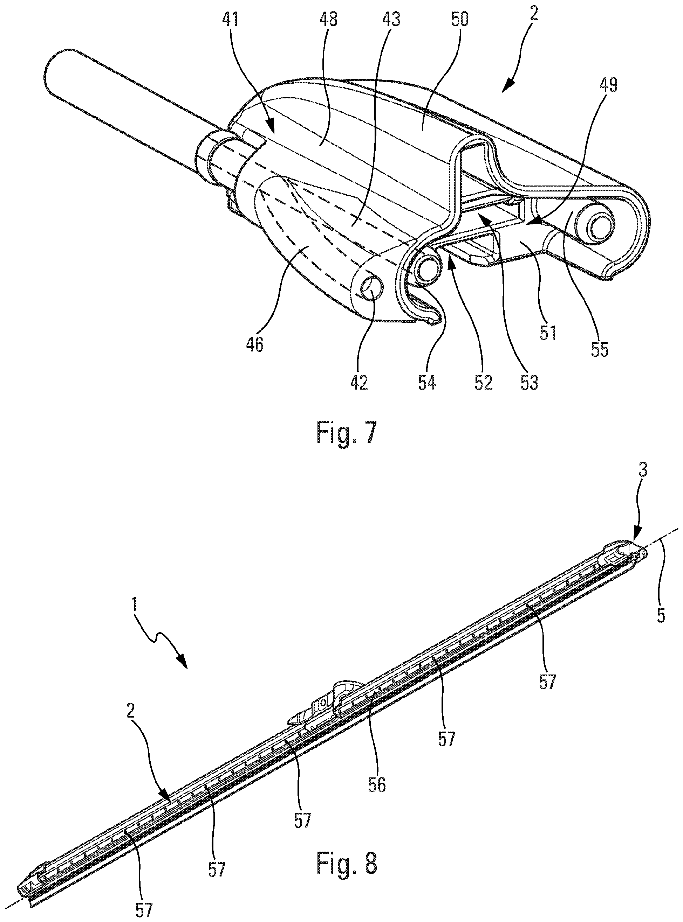

Le connecteur 22 peut comporter un moyen pour mettre en communication le premier conduit 4 formé dans chacune des portions 23 et 24 constitutives du déflecteur d'air 15. C'est notamment le cas lorsque le liquide de lavage entre dans le balai d'essuyage 1 par le dispositif de projection 2, comme cela sera décrit en référence au figures 6 et 7.

De manière alternative, le connecteur 22 peut être configuré pour former le point d'entrée du liquide de lavage dans le balai d'essuyage 1. Dans une telle situation, le connecteur 22 comprend un manchon d'entrée sur lequel se raccorde un tube du dispositif d'approvisionnement en liquide de lavage. Le connecteur 22 comprend également des canaux raccordés à ce manchon d'entrée et en communication avec les conduits formés dans les portions 23 et 24 constitutives du déflecteur d'air 15.

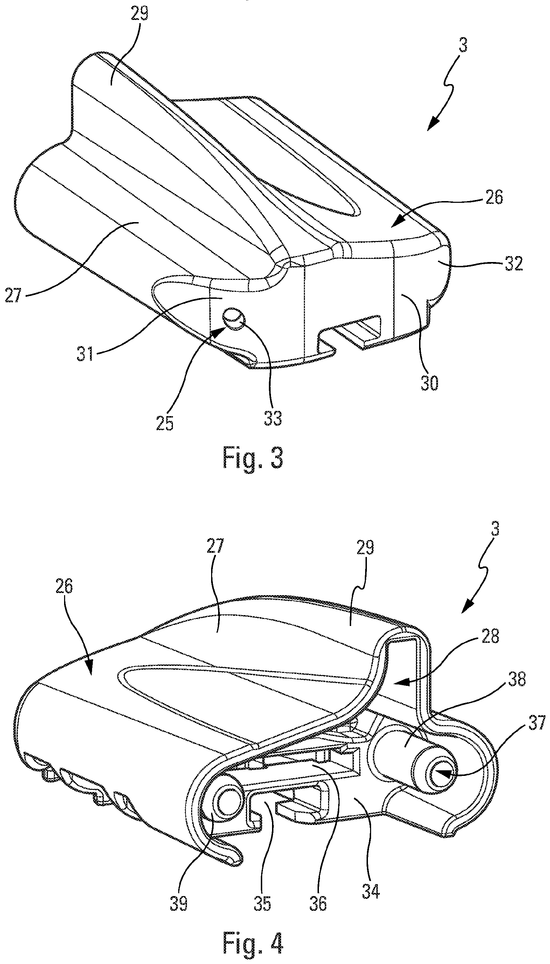

Les figures 3 et 4 illustrent un exemple de réalisation du moyen de projection 3 montré indépendamment du balai d'essuyage 1, alors que la figure 5 montre le moyen de projection 3 enfilé au niveau de la première extrémité 6 du balai d'essuyage 1 selon l'invention.

La figure 3 est une vue en perspective montrant un premier côté du moyen de projection 3 où débouche un moyen de diffusion 25 du liquide de lavage, alors que la figure 4 est une vue en perspective montrant un côté opposé du moyen de projection 3, illustrant plus particulièrement l'intérieur du moyen de projection 3.

Ce moyen de projection 3 est formé par un premier embout 26, c'est-à-dire une pièce qui s'enfile sur la première extrémité du balai d'essuyage et qui vient en butée contre celle-ci. Ce premier embout 26 chevauche en particulier la ou les vertèbres, le déflecteur d'air et éventuellement le support, constitutifs du balai d'essuyage. Un tel premier embout 26 maintient ensemble au moins deux de ces composants, et avantageusement les trois.

Le premier embout 26 comprend une paroi 27 définissant un volume ouvert 28 dans lequel se loge au moins le déflecteur d'air du balai d'essuyage. La forme de la paroi 27 est ainsi complémentaire de la forme extérieure du déflecteur d'air. C'est pourquoi le moyen de projection 3 comprend une aile déflectrice 29 qui coiffe l'aube formée sur le déflecteur d'air du balai d'essuyage selon l'invention.

Le premier embout 26 est terminé par une face 30 qui joint les côtés latéraux de ce premier embout au moyen d'arrondis 31 et 32. Le moyen de diffusion 25 débouche au niveau de cette face 30, par exemple au droit d'un des arrondis, par exemple l'arrondi situé immédiatement au voisinage de l'aile déflectrice 29.

Selon un exemple de réalisation montré sur les figures 3 à 5, le moyen de diffusion 25 prend la forme d'un trou 33 qui traverse la paroi constitutive du premier embout 26. Le diamètre de ce trou 33 est calibré de manière à réaliser un jet de liquide de lavage à une distance déterminée du premier embout 26.

La figure 4 montre certaines formes internes du moyen de projection 3. A l'intérieur du volume ouvert 28, on trouve un corps 34 fabriqué de manière unitaire avec la paroi 27. Une rainure 35 est ménagée dans le corps 34 de manière à recevoir le talon de la lame d'essuyage, de manière similaire à la liaison mécanique opérée entre ce talon et le support du balai d'essuyage.

Entre cette rainure 35 et la paroi 27, le corps 34 comprend une niche 36 dans laquelle se loge une extrémité longitudinale de la vertèbre du balai d'essuyage.

Le premier embout 26 formant le moyen de projection comprend encore un canal 37 de circulation du liquide de lavage. Un tel canal est formé par une portion évidée du premier embout 26, ce canal 37 étant en communication avec le moyen de diffusion 25.

Dans cet exemple particulier, le canal 37 est formé d'une part dans le corps 34 et d'autre part dans une première excroissance 38 issue du corps 34 et qui s'étend dans le volume interne 28. Une telle première excroissance 38 est configurée pour entrer dans le premier conduit formé par exemple au niveau du déflecteur d'air du balai d'essuyage.

Une deuxième excroissance 39 peut prendre naissance sur le corps 34 du premier embout 26, cette dernière étant alors ménagée à l'opposé de la première excroissance 38 par rapport à la niche 36. Cette première excroissance 38 peut être configurée pour entrer dans un deuxième conduit formé dans le balai d'essuyage, une telle solution technique étant détaillée plus bas.

La figure 5 montre une perspective du moyen de projection 3 coupé selon un axe passant au centre du canal 37 de circulation de liquide de lavage. Le canal 37 est rectiligne et il est terminé par le moyen de diffusion 25.

Selon un exemple de réalisation du moyen de diffusion 25, l'extrémité du canal 37 de circulation qui débouche au niveau de la face 30 du premier embout 26 présente une forme sphérique dans laquelle se loge une bille percée 40. La forme également sphérique de cette dernière permet d'orienter le jet de liquide de lavage dans une multiplicité de directions, de manière à adapter la projection de liquide de lavage.

La description ci-dessus évoque un moyen de projection 3 pourvu d'un unique moyen de diffusion 25 combiné à un unique canal 37 de circulation du liquide de lavage. Selon une alternative, il est bien entendu possible de prévoir un deuxième canal dans le premier embout 26, combiné à un deuxième moyen de diffusion. On forme ainsi un moyen de projection avec deux orifices de projection.

Les figures 6 et 7 illustrent un exemple de réalisation du dispositif de projection 2 installé sur le balai d'essuyage montré à la figure 1. Sur la figure 6, le dispositif de projection 2 est montré enfilé sur la deuxième extrémité 7 du balai d'essuyage 1, alors que la figure 7 montre ce dispositif de projection 2 indépendamment du balai d'essuyage.

Ce dispositif de projection 2 est ainsi formé par un deuxième embout 41, c'est-à-dire une pièce qui s'enfile sur la deuxième extrémité 7 du balai d'essuyage 1 et qui vient en butée contre celle-ci. Ce deuxième embout 41 chevauche en particulier la ou les vertèbres, le déflecteur d'air 15 constitutifs du balai d'essuyage 1, et éventuellement le support lorsque le balai d'essuyage en est pourvu. Un tel deuxième embout 41 maintient ensemble au moins deux de ces composants, et avantageusement les trois.

Selon un exemple de réalisation, le deuxième embout 41 comprend au moins un orifice de pulvérisation 42 agencé pour projeter le liquide de lavage sur la première zone de la vitre balayée par le balai d'essuyage 1 porteur de ce deuxième embout 41.

Le deuxième embout 41 reçoit un canal 43 qui est en communication d'un côté avec une tubulure d'entrée 44 de liquide de lavage, et de l'autre avec le premier conduit 4 de transport de liquide de lavage qui chemine au niveau du balai d'essuyage 1, en vu d'alimenter en liquide de lavage le moyen de projection.

La tubulure d'entrée 44 est issue de matière avec le deuxième embout 41. Elle est agencée pour s'insérer à l'intérieur d'un tube 45 formant un exemple du dispositif d'approvisionnement en liquide de lavage. Cette tubulure d'entrée 44 peut comporter un secteur conique facilitant l'insertion dans ce tube 45, ainsi qu'une collerette externe qui forme un moyen de maintien entre le tube 45 et la tubulure d'entrée 44.

Le deuxième embout 41 comprend encore une canalisation 46 qui conduit le liquide de lavage depuis la tubulure d'entrée 44 vers l'orifice de pulvérisation 42. Selon un exemple de réalisation, cette canalisation 46 chemine dans un renflement 47 qui débouche d'une paroi périphérique 48 délimitant le deuxième embout 41, un tel renflement 47 étant issu de matière avec la paroi périphérique 48.

La figure 7 montre que le deuxième embout 41 présente une structure similaire à celle du premier embout en ce qui concerne la liaison mécanique entre le deuxième embout 41 et l'extrémité du balai d'essuyage.

C'est ainsi que le deuxième embout 41 comprend la paroi périphérique 48 définissant un volume interne 49 dans lequel se loge au moins le déflecteur d'air du balai d'essuyage. Le profil suivi par la paroi périphérique 48 est complémentaire à celui du déflecteur d'air du balai d'essuyage. C'est pourquoi le dispositif de projection 2 comprend un flanc déflecteur 50 qui coiffe l'aube formée sur le déflecteur d'air du balai d'essuyage selon l'invention.

A l'intérieur du volume interne 49, on trouve un bloc 51 fabriqué de manière unitaire avec la paroi périphérique 48. Un sillon 52 est ménagé dans le bloc 51 de manière à recevoir le talon de la lame d'essuyage, de manière similaire à la liaison mécanique opérée entre ce talon et le support du balai d'essuyage.

Entre ce sillon 52 et la paroi périphérique 48, le bloc 51 comprend un creux 53 dans laquelle se loge une extrémité longitudinale de la vertèbre du balai d'essuyage.

Le deuxième embout 41 formant le dispositif de projection 2 comprend le canal 43 de circulation du liquide de lavage. Un tel canal est formé par une portion évidée du deuxième embout 41, ce canal 43 étant par ailleurs en communication avec l'orifice de diffusion 42 en passant par la canalisation 46.

Dans cet exemple particulier, le canal 43 est formé de manière rectiligne d'une part dans le bloc 51 et d'autre part dans une première excroissance 54 issue du bloc 51 et qui s'étend dans le volume interne 49. Une telle première excroissance 54 est configurée pour entrer dans le premier conduit formé par exemple au niveau du déflecteur d'air du balai d'essuyage.

Une deuxième excroissance 55 peut prendre naissance sur le bloc 51 du deuxième embout 41, cette dernière étant alors ménagée à l'opposé de la première excroissance 54 par rapport au creux 53. Cette deuxième excroissance 55 peut être configurée pour entrer dans un deuxième conduit formé dans le balai d'essuyage, une telle solution technique étant détaillée ci-après.

Les figures 8 et 9 montrent un deuxième exemple de réalisation d'un balai d'essuyage 1 selon l'invention. Un tel deuxième exemple diffère du mode de réalisation décrit ci-dessus par la structure du dispositif de projection 2. Ainsi, la structure du balai d'essuyage 1 et la structure du moyen de projection 3 sont identiques à celles décrites précédemment, et on se reportera à la description des figures 1 à 5 pour en connaître les détails, à l'exception de ce qui suit.

Le dispositif de projection 2 est ici formé par un deuxième conduit 56 apte à canaliser le liquide de lavage. Selon une possibilité offerte par l'invention, ce deuxième conduit 56 peut être en communication avec le moyen de projection 3. Selon une autre possibilité, ce deuxième conduit 56 peut être dédié, par exemple exclusivement, à la mise en oeuvre du dispositif de projection 2, le premier conduit évoqué précédemment étant alors dédié, par exemple exclusivement, à la fourniture de liquide de lavage au moyen de projection 3.

Dans cet exemple de réalisation du dispositif de projection 2, le liquide de lavage est projeté tout le long de l'axe longitudinal 5 du balai d'essuyage 1. Pour ce faire, Le deuxième conduit 56 est pourvu d'une multiplicité de trous 57 ménagée le long du deuxième conduit 56. Ce dernier et cette multiplicité de trous 57 forment ainsi une rampe de projection qui projette le liquide de lavage sur la zone du pare-brise balayée par le balai d'essuyage 1 porteur d'une telle rampe.

La figure 9 montre une coupe transversale du balai d'essuyage 1 selon le mode de réalisation où le balai d'essuyage 1 comprend le premier conduit 4 affecté au moyen de projection et le deuxième conduit 56 affecté au dispositif de projection 2 sous forme de rampe, les deux conduits étant intégrés au balai d'essuyage 1.

Dans cet exemple de réalisation, les deux conduits 4, 56 sont ménagés dans le déflecteur d'air 15, notamment à l'opposé l'un de l'autre par rapport à la vertèbre de rigidification 9. Le deuxième conduit 56 est pourvu de la pluralité d'orifices de pulvérisation formés chacun par le trou 57 débouchant dans le deuxième conduit 56. Le premier conduit 4 est quant à lui raccordé au moyen de projection installé sur le balai d'essuyage 1.

Le reste de la structure du balai d'essuyage 1 est identique à celle décrite en référence à la figure 2.

La figure 10 montre un mode de réalisation d'un système d'essuyage 58 selon l'invention. Un tel système comprend deux balais d'essuyage, dont au moins un est réalisé selon l'une quelconque des descriptions présentées ci-dessus. De manière complémentaire, l'autre balai d'essuyage peut être dépourvu de tout moyen de projection du liquide de lavage.

La figure 10 illustre la vitre d'un véhicule, par exemple un véhicule automobile. Une telle vitre est un pare-brise 59 délimité par une face intérieure, tournée vers l'habitacle du véhicule, ainsi que par une face extérieure tournée vers l'extérieur du véhicule.

Le système d'essuyage 58 est installé sur ce pare-brise 59, de manière à d'une part évacuer l'eau présente sur la face extérieure, et d'autre part assurer une projection d'un liquide de lavage sur cette même face.

Sur la figure 10, le système d'essuyage 58 est illustré dans une position de fonctionnement, c'est-à-dire une position où le balai d'essuyage 1, ci-après appelé premier balai d'essuyage 1, et un deuxième balai d'essuyage 60 sont en train de racler la face extérieure du pare-brise 59.

Ce système d'essuyage 58 comprend ainsi le premier balai d'essuyage 1 destiné à essuyer la première zone 61 du pare-brise 59, cette dernière étant illustrée par un trait pointillé qui délimite la première zone 61. Selon cet exemple de réalisation, cette première zone 61 est du côté conducteur du véhicule, le premier balai d'essuyage 1 étant configuré pour être monté du côté conducteur du véhicule, en conduite à gauche.

Le premier balai d'essuyage 1 est relié à un premier point de rotation par l'intermédiaire d'un premier bras (non représenté), le premier balai d'essuyage 1 et le premier bras effectuant un mouvement de va-et-vient en balayant la première zone 61. Le mouvement de rotation du premier bras est opéré par un moteur électrique, éventuellement électronisé. Le mouvement de rotation peut être transmit directement du moteur électrique au bras, mais il peut également être transmit de manière indirecte, notamment par l'intermédiaire de biellettes et/ou d'un palonnier.

Le système d'essuyage 58 comprend encore le deuxième balai d'essuyage 60 destiné à essuyer une zone du pare-brise 59 au moins en partie différente de la première zone 61. Cette zone balayée par le deuxième balai d'essuyage 60 est appelée deuxième zone 62 du pare-brise 59, cette dernière étant illustrée par un trait plein qui entoure la deuxième zone 62. On notera que la première zone 61 et la deuxième zone 62 du pare-brise 59 se chevauchent au moins sur une partie centrale du pare-brise 59, délimitée à la fois par le trait plein et le trait pointillé.

Le système d'essuyage 58 selon l'invention s'intéresse plus particulièrement au nettoyage de la deuxième zone 62 du pare-brise 59 qui ne se chevauche pas avec la première zone 61 de ce même pare-brise. Ce nettoyage de la deuxième zone 62 est ainsi opéré par une projection de liquide de lavage en provenance du premier balai d'essuyage 1, ainsi que par un essuyage de cette deuxième zone au moyen du deuxième balai d'essuyage, ce dernier étant par exemple dépourvu de tout système de projection du liquide de lavage sur la deuxième zone 62 du pare-brise 59.

De manière complémentaire, l'invention peut envisager le nettoyage d'une partie supérieure de la deuxième zone 62, cette partie étant entourée par un cercle référencé 63 sur la figure 10. Cette partie supérieure 63 de la deuxième zone 62 du pare-brise 59 reçoit un élément 64 qui analyse l'état du pare-brise 59 ou l'état de la route située en avant du véhicule. Il peut ainsi s'agir d'un détecteur de pluie solidaire de la face intérieure du pare-brise 59 et installé au droit de la partie supérieure 63. Il peut également s'agir d'un capteur d'ensoleillement, d'un appareil photographique ou encore d'une caméra, notamment pour une vision de nuit. Il peut enfin s'agir d'un détecteur de brouillard, de salissures ou un détecteur de panneaux signalétiques.

Selon cet exemple de réalisation, cette deuxième zone 62 est du côté passager du véhicule, le deuxième balai d'essuyage 60 étant configuré pour être monté du côté passager du véhicule, en conduite à gauche.

Le deuxième balai d'essuyage 60 est relié à un point de rotation par l'intermédiaire d'un second bras (non représenté), le deuxième balai d'essuyage 60 et son second bras effectuant un mouvement de va-et-vient en balayant la deuxième zone 62 du pare-brise 59. Le mouvement de rotation de ce second bras est opéré par un moteur électrique, éventuellement électronisé. Alternativement, ce mouvement peut être opéré par l'intermédiaire de biellettes reliées au moteur d'actionnement du premier balai d'essuyage 1.

Selon un exemple de réalisation, le deuxième balai d'essuyage 60 peut être de type à raclette et palonniers. Il peut également s'agir d'un balai plat, appelé « flat blade », et comprenant une raclette, une ou deux vertèbres de rigidification et éventuellement un support.

Le système d'essuyage 58 selon l'invention peut comprendre aussi le dispositif d'approvisionnement 65 en liquide de lavage du pare-brise 59. Ce dispositif d'approvisionnement 65 comprend au moins un tube de transport du liquide de lavage installé entre au moins une pompe de mise en circulation du liquide et le premier balai d'essuyage 1. Comme évoqué plus haut, ce tube peut alors être raccordé par exemple au dispositif de projection 2 ou au connecteur assurant la liaison mécanique entre le premier balai d'essuyage 1 et son premier bras.

Selon un exemple de réalisation, on notera que le dispositif d'approvisionnement 65 peut inclure cette pompe de circulation et éventuellement un module de gestion de la circulation du liquide comprenant notamment au moins une vanne et/ou un clapet, ce module de gestion étant alors installé entre la pompe de circulation et le premier balai d'essuyage 1, et relié à ces composants par des tubes de transport du liquide de lavage. La pompe de circulation puise le liquide de lavage dans le réservoir disposé sur le véhicule.

Selon l'invention, le premier balai d'essuyage 1 est pourvu du moyen de projection 3 du liquide de lavage agencé sur le premier balai d'essuyage 1 de manière à projeter le liquide de lavage au moins sur la deuxième zone 62 du pare-brise 59, et éventuellement exclusivement sur cette deuxième zone 62. Le premier balai d'essuyage 1 comprend également le dispositif de projection 2 tel que détaillé ci-dessus.

Dans le système d'essuyage 58 selon l'invention, le premier balai d'essuyage 1, comprenant au moins le dispositif de projection 2 et le moyen de projection 3, peut être configuré pour être monté côté conducteur du véhicule, alors que le deuxième balai d'essuyage 60 peut être configuré pour être monté côté passager du véhicule. Cela peut être le cas lorsque les balais d'essuyage se déplacent en rotation dans un même sens à l'aller comme au retour.

A l'inverse, le premier balai d'essuyage 1 comprenant au moins le dispositif de projection 2 et le moyen de projection 3 peut être configuré pour être monté côté passager du véhicule, alors que le deuxième balai d'essuyage 60 peut être configuré pour être monté côté conducteur du véhicule. Cela peut être le cas lorsque les balais d'essuyage sont en montage type papillon, c'est-à-dire avec un mouvement antagoniste des balais d'essuyage au cours duquel le premier balai d'essuyage 1 se déplace en un sens opposé au sens de déplacement du deuxième balai d'essuyage 60, à l'aller comme au retour.

## Revendications

1. Balai d'essuyage (1) d'une vitre d'un véhicule, comprenant au moins un dispositif de projection (2) d'un liquide de lavage de la vitre agencé pour projeter ledit liquide de lavage sur une première zone (61) de la vitre essuyée par le balai d'essuyage (1), **caractérisé en ce qu'**il comprend un moyen de projection (3) du liquide de lavage agencé pour projeter le liquide de lavage exclusivement sur une zone de la vitre différente de la première zone (61), appelée deuxième zone (62), la deuxième zone (62) de la vitre n'étant pas balayée par le balai d'essuyage.

2. Balai selon la revendication 1, dans lequel est prévu au moins un premier conduit (4) apte à canaliser le liquide de lavage et en communication avec le moyen de projection (3).

3. Balai selon la revendication 2, dans lequel le premier conduit (4) est en communication avec le dispositif de projection (2).

4. Balai selon l'une quelconque des revendications 1 à 3, dans lequel le balai d'essuyage (1) s'étend selon un axe longitudinal (5) et comprend une première extrémité (6) et une deuxième extrémité (7) selon l'axe longitudinal, le moyen de projection (3) étant installé au niveau d'une des extrémités (6, 7) du balai d'essuyage (1).

5. Balai selon l'une quelconque des revendications précédentes, dans lequel le moyen de projection (3) est un premier embout (26) comprenant un canal de circulation (37) du liquide de lavage et au moins un moyen de diffusion (25) du liquide de lavage en communication avec le canal de circulation (37) et agencé pour projeter le liquide de lavage sur la deuxième zone (62) de la vitre.

6. Balai selon la revendication 5, dans lequel le moyen de diffusion (25) est un trou (33) débouchant au niveau d'une paroi (27) du premier embout (26).

7. Balai selon la revendication 5, dans lequel le moyen de diffusion (25) est une bille percée (40) et logée dans une paroi (27) du premier embout (26).

8. Balai selon l'une quelconque des revendications précédentes, dans lequel est prévu un deuxième conduit (56) apte à canaliser le liquide de lavage et en communication avec le dispositif de projection (2).

9. Balai selon la revendication 3 ou 8, dans lequel le dispositif de projection (2) comprend au moins une multiplicité de trous (57) ménagée le long du premier conduit (4) ou du deuxième conduit (56).

10. Balai selon la revendication 8 ou 9, dans lequel le deuxième conduit (56) est en communication avec le moyen de projection (3).

11. Balai selon l'une quelconque des revendications précédentes, dans lequel le dispositif de projection (2) comprend au moins un deuxième embout (41) installé à une extrémité (7) du balai d'essuyage (1), ledit deuxième embout (41) comprenant au moins un orifice de pulvérisation (42) agencé pour projeter le liquide de lavage sur la première zone (61) de la vitre.

12. Système d'essuyage (58) d'une vitre d'un véhicule comprenant un premier balai d'essuyage (1) selon l'une quelconque des revendications précédentes apte à essuyer la première zone (61) de la vitre, et un deuxième balai d'essuyage (60) apte à essuyer la deuxième zone (62) de la vitre.

13. Système d'essuyage selon la revendication 12, dans lequel le deuxième balai d'essuyage (60) est dépourvu de système de projection du liquide de lavage.

## Patentansprüche

1. Wischblatt (1) für eine Scheibe eines Fahrzeugs, welches wenigstens eine Vorrichtung zum Sprühen (2) einer Flüssigkeit zum Waschen der Scheibe umfasst, die dafür ausgelegt ist, die Waschflüssigkeit auf einen ersten Bereich (61) der von dem Wischblatt (1) gewischten Scheibe zu sprühen, **dadurch gekennzeichnet, dass** es ein Mittel zum Sprühen (3) der Waschflüssigkeit umfasst, das dafür ausgelegt ist, die Waschflüssigkeit ausschließlich auf einen von dem ersten Bereich (61) verschiedenen Bereich der Scheibe, zweiter Bereich (62) genannt, zu sprühen, wobei der zweite Bereich (62) der Scheibe nicht von dem Wischblatt überstrichen wird.

2. Wischblatt nach Anspruch 1, wobei wenigstens eine erste Leitung (4) vorgesehen ist, die geeignet ist, die Waschflüssigkeit zu leiten, und mit dem Mittel zum Sprühen (3) in Verbindung steht.

3. Wischblatt nach Anspruch 2, wobei die erste Leitung (4) mit der Vorrichtung zum Sprühen (2) in Verbindung steht.

4. Wischblatt nach einem der Ansprüche 1 bis 3, wobei sich das Wischblatt (1) entlang einer Längsachse (5) erstreckt und ein erstes Ende (6) und ein zweites Ende (7) entlang der Längsachse umfasst, wobei das Mittel zum Sprühen (3) an einem der Enden (6, 7) des Wischblattes (1) angebracht ist.

5. Wischblatt nach einem der vorhergehenden Ansprüche, wobei das Mittel zum Sprühen (3) ein erstes Ansatzstück (26) ist, das einen Kanal zur Zirkulation (37) der Waschflüssigkeit und wenigstens ein Mittel zur Verteilung (25) der Waschflüssigkeit, das mit dem Kanal zur Zirkulation (37) in Verbindung steht und dafür ausgelegt ist, die Waschflüssigkeit auf den zweiten Bereich (62) der Scheibe zu sprühen, umfasst.

6. Wischblatt nach Anspruch 5, wobei das Mittel zur Verteilung (25) ein Loch (33) ist, das an einer Wand (27) des ersten Ansatzstücks (26) mündet.

7. Wischblatt nach Anspruch 5, wobei das Mittel zur Verteilung (25) eine Kugel mit Bohrungen (40) ist und in einer Wand (27) des ersten Ansatzstücks (26) aufgenommen ist.

8. Wischblatt nach einem der vorhergehenden Ansprüche, wobei eine zweite Leitung (56) vorgesehen ist, die geeignet ist, die Waschflüssigkeit zu leiten, und mit der Vorrichtung zum Sprühen (2) in Verbindung steht.

9. Wischblatt nach Anspruch 3 oder 8, wobei die Vorrichtung zum Sprühen (2) wenigstens eine Vielzahl von Löchern (57) umfasst, die entlang der ersten Leitung (4) oder der zweiten Leitung (56) ausgebildet sind.

10. Wischblatt nach Anspruch 8 oder 9, wobei die zweite Leitung (56) mit dem Mittel zum Sprühen (3) in Verbindung steht.

11. Wischblatt nach einem der vorhergehenden Ansprüche, wobei die Vorrichtung zum Sprühen (2) wenigstens ein zweites Ansatzstück (41) umfasst, das an einem Ende (7) des Wischblattes (1) angebracht ist, wobei das zweite Ansatzstück (41) wenigstens eine Sprühöffnung (42) umfasst, die dafür ausgelegt ist, die Waschflüssigkeit auf den ersten Bereich (61) der Scheibe zu sprühen.

12. Wischsystem (58) für eine Scheibe eines Fahrzeugs, welches ein erstes Wischblatt (1) nach einem der vorhergehenden Ansprüche, das geeignet ist, den ersten Bereich (61) der Scheibe zu wischen, und ein zweites Wischblatt (60), das geeignet ist, den zweiten Bereich (62) der Scheibe zu wischen, umfasst.

13. Wischsystem nach Anspruch 12, wobei das zweite Wischblatt (60) nicht mit einem System zum Sprühen der Waschflüssigkeit versehen ist.

## Claims

1. Wiper blade (1) for a window of a vehicle, comprising at least one device (2) for spraying a window washing liquid, arranged to spray said washing liquid over a first zone (61) of the window wiped by the wiper blade (1), **characterised in that** it comprises a means (3) for spraying the washing liquid which is arranged to spray the washing liquid exclusively on one zone of the window different from the first zone (61), called the second zone (62), the second zone (62) of the window not being swept by the wiper blade.

2. Wiper blade as claimed in claim 1, wherein at least one first pipe (4) is provided which is able to conduct the washing liquid and is in communication with the spraying means (3).

3. Wiper blade as claimed in claim 2, wherein the first pipe (4) is in communication with the spraying device (2).

4. Wiper blade as claimed in any of claims 1 to 3, wherein the wiper blade (1) extends along a longitudinal axis (5) and comprises a first end (6) and a second end (7) in the longitudinal axis, the spraying means (3) being installed at one of the ends (6, 7) of the wiper blade (1) .

5. Wiper blade as claimed in any of the preceding claims, wherein the spraying means (3) is a first cap (26) comprising a circulation channel (37) for the washing liquid and at least one distribution means (25) for the washing liquid which is in communication with the circulation channel (37) and arranged to spray the washing liquid over the second zone (62) of the window.

6. Wiper blade as claimed in claim 5, wherein the distribution means (25) is a hole (33) opening in a wall (27) of the first cap (26).

7. Wiper blade as claimed in claim 5, wherein the distribution means (25) is a pierced ball (40) housed in a wall (27) of the first cap (26).

8. Wiper blade as claimed in any of the preceding claims, wherein a second pipe (56) is provided which is able to conduct the washing liquid and is in communication with the spraying device (2).

9. Wiper blade as claimed in claim 3 or 8, wherein the spraying device (2) comprises at least a multiplicity of holes (57) arranged along the first pipe (4) or second pipe (56).

10. Wiper blade as claimed in claim 8 or 9, wherein the second pipe (56) is in communication with the spraying means (3).

11. Wiper blade as claimed in any of the preceding claims, wherein the spraying device (2) comprises at least one second cap (41) installed at one end (7) of the wiper blade (1), said second cap (41) comprising at least one atomisation orifice (42) arranged to spray the washing liquid over the first zone (61) of the window.

12. Wiper system (58) for a window of a vehicle, comprising a first wiper blade (1) as claimed in any of the preceding claims and able to wipe the first zone (61) of the window, and a second wiper blade (60) able to wipe the second zone (62) of the window.

13. Wiper system as claimed in claim 12, wherein the second wiper blade (60) has no system for spraying washing liquid.
